# EUROPEAN PATENT APPLICATION

(11) **EP 2 918 328 A1**
(43) Date of publication of application: **16.09.2015**
(21) Application number: 13852572.0
(22) Date of filing: 12.09.2013
(51) Int. Cl.: B01D 53/86, B01D 53/34, B01D 53/50

(54) **EXHAUST GAS TREATMENT SYSTEM AND METHOD**

(30) Priority: 09.11.2012 JP 2012247788
(71) Applicant: Mitsubishi Hitachi Power Systems, Ltd., Yokohama 220-8401 (JP)
(72) Inventor: USHIKU, Tetsu, Tokyo 108-8215 (JP); NAGAYASU, Tatsuto, Tokyo 108-8215 (JP); KAGAWA, Seiji, Tokyo 108-8215 (JP)
(74) Representative: Bongiovanni, Simone
(86) International application number: PCT/JP2013/074710
(87) International publication number: WO 2014/073268

(57) **Abstract**

This exhaust gas treatment system has: a denitrification device (14) that is provided in a flue (13) through which an exhaust gas (12) from a boiler (11) is discharged and that removes nitrogen oxides from the exhaust gas (12); an SO2·SO3 conversion catalyst unit (15) that is provided in the flue (13) on the wake side of the denitrification device (14) and that has a conversion catalyst which converts SO2 (sulfur dioxide) in the denitrified exhaust gas (12A) into SO3 (sulfur trioxide); a heat exchanger (16) that is provided in the flue (13) on the wake side of the SO2·SO3 conversion catalyst unit (15) and that conducts heat exchange between the exhaust gas (12B), which has passed through the catalyst, and air (20) to lower the temperature of the exhaust gas (12B) to a sulfuric acid dew point or lower and that makes dust and soot adhere to the surfaces of sulfuric acid droplets contained in the exhaust gas, the temperature of which has been lowered to a sulfuric acid dew point or lower in the heat exchanger (16); and a dust collector (17) that collets not only the dust- and soot-covered sulfuric acid but also dust and soot contained in the exhaust gas (12C). In the exhaust gas treatment system, the desulfurization of an exhaust gas is attained by: catalytically converting SO₂ contained in an exhaust gas into SO₃; subjecting the SO3-containing exhaust gas to heat exchange with air in a heat exchanger to lower the temperature of the exhaust gas to a sulfuric acid dew point or lower; making dust and soot adhere to the surfaces of sulfuric acid droplets contained in the exhaust gas; and collecting the dust- and soot-covered sulfuric acid together with dust and soot by a dust collector.

## Description

### Technical Field

The present invention relates to a flue gas treatment system and a flue gas treatment method.

### Background Art

Nitrogen oxides (NOx), sulfur oxides (SOx), dust, or the like, which are generated due to the combustion of fossil fuels in thermoelectric power plants or the like, are contained in flue gas (exhaust gas). Since NOx, SOx, dust, or the like cause atmospheric pollution, thermoelectric power plants or the like having a coal-fired boiler are provided with a flue gas treatment system having a denitrification device for removing NOx and a flue gas desulfurization device for removing SOx.

Here, in the flue gas desulfurization device, a wet type limestone-plaster method is mainly used. In particular, a spray type method in which a limestone slurry is sprayed in a spray form from a nozzle and is brought into gas-liquid contact with the flue gas has high reliability and is primarily adopted as a method of spraying the limestone slurry into a tower (PTL 1).

### Citation List

### Patent Literature

[PTL 1] Japanese Unexamined Patent Application Publication No. 2006-326575

### Summary of Invention

### Technical Problem

However, although the wet type desulfurization device has excellent desulfurization performance, there is a problem in that the amount of water consumption increases.

Although dry type desulfurization devices other than the wet type methods are proposed for removing SO₂, for example using activated coke, there is a problem in that performance is insufficient or energy loss and utilities are great.

In recent years, since environmental regulations around the world have become more rigorous, installation of desulfurization devices is increasingly needed even in areas where there is an insufficient amount of water and where the desulfurization devices are not installed in the related art.

Thus, emergence of a flue gas treatment system that can perform desulfurization processing of a flue gas without using water such as the wet type desulfurization device is desired.

An object of the invention in view of the problems is to provide a flue gas treatment system and a flue gas treatment method that can perform desulfurization processing in a flue gas without using water such as a wet type desulfurization device.

### Solution to Problem

In order to solve the above problems, a first invention of the invention is a flue gas treatment system including an SO₂·SO₃ conversion catalyst unit that is provided in a flue through which a flue gas from a boiler is discharged and that has a conversion catalyst which converts SO₂ in the flue gas into SO₃; a heat exchanger that is provided in the flue on a downstream of the SO₂·SO₃ conversion catalyst unit, that conducts heat exchange between the flue gas and air to lower the temperature of the flue gas to a sulfuric acid dew point or lower, and that condenses SO₃ contained in the flue gas, the temperature of which has been lowered to the sulfuric acid dew point or lower, as sulfuric acid droplets mixed with dust; and a dust collector that collects the sulfuric acid droplets mixed with the dust contained in the flue gas.

A second invention is the flue gas treatment system according to the first invention in which an air preheater is interposed on an upstream side of the SO₂·SO₃ conversion catalyst unit.

A third invention is the flue gas treatment system according to the first or second invention further including an air supply line that supplies preheated air, with which heat exchange is conducted in the heat exchanger, or boiler circulated water to the boiler.

A fourth invention is the flue gas treatment system according to the first or second invention further including powder supply means for supplying powder, between the SO₂·SO₃ conversion catalyst unit and the heat exchanger.

A fifth invention is the flue gas treatment system according to the fourth invention in which the powder is limestone or collected dust powder that is collected in the dust collector.

A sixth invention is a flue gas treatment method including an SO₂·SO₃ conversion catalyst process that is provided in a flue through which a flue gas from a boiler is discharged and that has a conversion catalyst which converts SO₂ in the flue gas into SO₃; a heat exchange process that is provided in the flue on a downstream of the SO₂·SO₃ conversion catalyst process, that conducts heat exchange between the flue gas and air to lower the temperature of the flue gas to a sulfuric acid dew point or lower; and a dust collection process that collects sulfuric acid droplets with dust formed in the heat exchanger in making sulfuric acid droplets contained in the flue gas, the temperature of which has been lowered to the sulfuric acid dew point or lower, mix with dust contained in the flue gas.

A seventh invention is the flue gas treatment method according to the sixth invention further including an air preheating process on an upstream side of the SO₂·SO₃ conversion-catalyst process.

An eighth invention is the flue gas treatment method according to the sixth or seventh invention in which powder is provided between the SO₂·SO₃ conversion catalyst process and the heat exchange process.

### Advantageous Effects of Invention

According to the invention, the desulfurization of the flue gas can be attained by catalytically converting SO₂ contained in the flue gas into SO₃; subjecting the converted SO₃-containing flue gas to be heat exchanged with air in the heat exchanger to lower the temperature of the flue gas to the sulfuric acid dew point or lower; making the dust adhere to the surfaces of the sulfuric acid droplets contained in the flue gas; and collecting the sulfuric acid with dust together with the dust by the dust collector.

### Brief Description of Drawings

Fig. 1 is a schematic view of a flue gas treatment system according to Example 1.
Fig. 2 is a schematic view of a flue gas treatment system according to Example 2.
Fig. 3 is a schematic view of a flue gas treatment system according to Example 3.

### Description of Embodiments

Preferred examples of the invention will be described below in detail with reference to the accompanying drawings. In addition, the invention is not limited by the examples and includes those configured by combining respective examples when there are a plurality of examples.

### Example 1

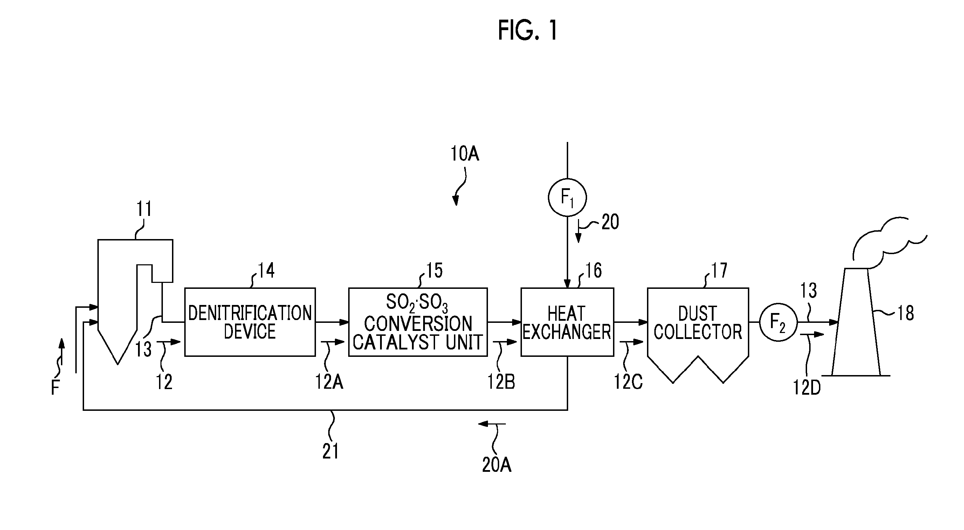

Fig. 1 is a schematic view of a flue gas treatment system according to Example 1. As illustrated in Fig. 1, a flue gas treatment system 10A according to the present example has a denitrification device 14 that is provided in a flue 13 through which a flue gas 12 is discharged from a boiler 11 and that removes nitrogen oxides from the flue gas 12; an SO₂·SO₃ conversion catalyst unit 15 that is provided in the flue on the downstream of the denitrification device 14 and that has a conversion catalyst which converts SO₂ (sulfur dioxide) in the denitrified flue gas 12A into SO₃ (sulfur trioxide); a heat exchanger 16 that is provided in the flue 13 on the downstream of the SO₂·SO₃ conversion catalyst unit 15 and that conducts heat exchange between the flue gas 12B, which has passed through the catalyst, and air 20 to lower the temperature of the flue gas 12B to a sulfuric acid dew point or lower; and a dust collector 17 that collects not only sulfuric acid with dust 32 formed in making dust 31 adhere to the surfaces of sulfuric acid droplets 30 contained in the flue gas, the temperature of which has been lowered to a sulfuric acid dew point or lower in the heat exchanger 16, but also the dust 31 contained in the flue gas 12C. In this drawing, F₁ represents a forced draft fan, and F₂ represents an induced draft fan.

The denitrified and discharged flue gas 12A from the denitrification device 14 has an flue gas temperature, for example, around 300°C to 400°C, and is introduced into the SO₂·SO₃ conversion catalyst unit 15 at this temperature. SO₂ is oxidized and turned into SO₃ by the conversion catalyst that converts SO₂ provided in the SO₂·SO₃ conversion catalyst unit into SO₃.

This SO₃ is still in a gaseous state.

Next, the flue gas 12B containing the converted SO₃ is introduced into the heat exchanger 16, and conducts heat exchange with the air 20 in the heat exchanger, and thereby the temperature of the flue gas 12B is dropped down to the sulfuric acid dew point (for example, 100°C) or lower.

Here, a heat exchanger of a heat exchange type that makes gas and gas come into contact with each other to conduct direct heat exchange, a heat exchanger of an indirect heat exchange type that conducts indirect heat exchange between gas to be cooled and gas to be warmed, using a heat medium, or the like can be used as the heat exchanger 16.

As a result of this temperature drop, SO₃ in the gaseous state is turned into sulfuric acid (H₂SO₄) droplets containing moisture in the flue gas.

Here, the sulfuric acid droplets contained in the flue gas 12B are mixed with a large amount of the dust contained in the flue gas 12B, and are turned into the sulfuric acid with dust.

In this way, according to the invention, in the heat exchanger 16, the temperature of the flue gas is lowered to the sulfuric acid dew point or lower, and SO₃ contained in the flue gas, which has been lowered to the sulfuric acid dew point or lower, is condensed as the sulfuric acid droplets mixed with the dust.

As for the sulfuric acid with dust, the surfaces of the sulfuric acid droplets are surrounded by innumerable dust, and the flue gas 12C containing the sulfuric acid with dust is introduced to the dust collector 17. Then, in the dust collector 17, the sulfuric acid is collected together with the dust, desulfurization in the flue gas is completed, and the cleaned flue gas 12D is obtained.

Thereafter, the cleaned flue gas 12D is sent to a chimney 18 by an induced draft fan F₂.

In the present example, preheated air 20A is sent to the boiler 11 side by an air supply line 21, using the air 20 as the heat exchange medium of the heat exchanger 16. However, water may be used as the heat medium so as to be used for preheating of boiler circulated water.

Additionally, when heat exchange is conducted between the air 20 and the flue gas 12B, water may be used as the heat medium.

As a result, the energy efficiency of entire power plants can be improved.

According to the invention, since the air at an atmospheric temperature is used as the heat exchange medium, it is unnecessary to use a large amount of water like the related-art wet-type desulfurization devices.

Moreover, since a mechanism that removes a sulfur component contained in the gas is based on condensation, moisture serving as a counteraction medium becomes unnecessary.

Additionally, recovered heat can be used for preheating of boiler combustion air, and heat exchange efficiency is improved by conducting heat exchange down to 100°C or lower compared to the related art. That is, in the related art, sulfurous acid or sulfuric acid corrosion occurs during heat exchange in an air preheater if the temperature of heat is lowered to 100°C or equal to or lower than the sulfuric acid dew point. Thus, the heat exchange is conducted at about 150°C.

In the invention, when air is preheated, the temperature of the air can be lowered down to 100°C or equal to or lower than the sulfuric acid dew point. Thus, energy exchange efficiency is improved by that equivalent to 50°C compared to the related art.

As a result, it is possible to raise the energy efficiency of the power plants by 0.5% or higher.

Additionally, the power of the induced draft fan F₂ that induces the flue gas can be reduced by cooling the flue gas 12 down to 100°C or lower.

Additionally, in the invention, the amount of the SO₂ gas, which passes through the heat exchanger and is emitted into the atmospheric air, can be suppressed to be low by using the conversion catalyst that converts SO₂ into SO₃.

### Example 2

Next, a flue gas treatment system according to Example 2 of the invention will be described. In addition, the same constituent members as those of Example 1 will be designated by the same reference numerals, and duplicate description will be omitted.

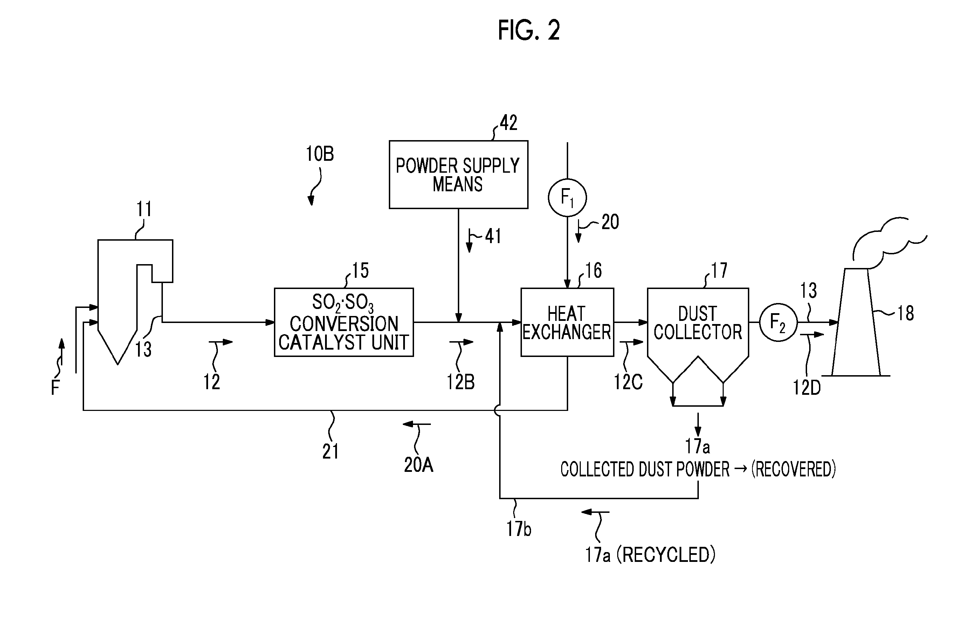

Fig. 2 is a schematic view of the flue gas treatment system according to Example 2 of the invention.

As illustrated in Fig. 2, a flue gas treatment system 10B of the present example is provided with powder supply means 42 that introduces limestone 41, which is in a powder form, into the flue 13 between the SO₂·SO₃ conversion catalyst unit 15 and the heat exchanger 16.

When coal is used as fuel F for the boiler 11, there are no problems because the amount of the dust contained in the flue gas 12 is huge. However, for example, when heavy oil, coal with little ash, or the like is used as the fuel F, the amount of the dust contained in the flue gas 12 may be small depending on the type of the heavy oil. In this case, covering of the sulfuric acid droplets 30 with the dust 31 in the heat exchanger 16 may not be precise.

For this reason, the sulfuric acid droplets 30 are sent to and collected by the dust collector 17 in a dry state by introducing the limestone 41 and covering the sulfuric acid droplets 30 with the dust 31 and the limestone 41.

Here, since the amount of the dust sufficient to mix the sulfuric acid with is determined, the amount of the dust is measured in advance when heavy oil or coal with little ash is used as the fuel F, and the required amount of powder, for example, the limestone 41 is introduced when the amount of the dust is insufficient.

Additionally, collected dust powder 17a, such as limestone, which becomes a surplus and is recovered by the dust collector 17, may be partially recycled via a recycling line 17b and may be supplied as powder to an upstream side of the heat exchanger 16.

### Example 3

Next, a flue gas treatment system according to Example 3 of the invention will be described. In addition, the same constituent members as those of Example 1 will be designated by the same reference numerals, and duplicate description will be omitted.

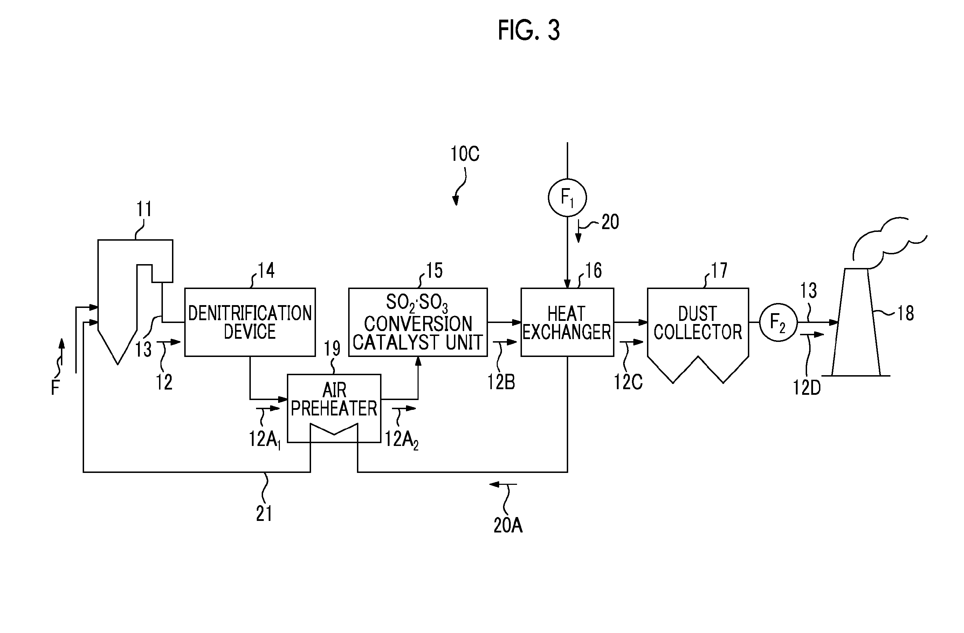

Fig. 3 is a schematic view of the flue gas treatment system according to Example 3 of the invention.

As illustrated in Fig. 3, in a flue gas treatment system 10C of the present example, an air preheater 19 is further interposed between the denitrification device 14 and the SO₂·SO₃ conversion catalyst unit 15 in Example 1.

Heat exchange is conducted between a high-temperature flue gas 12A₁ and the air 20 using the air preheater 19, and the preheated air 20A after the heat exchange is introduced into the boiler 11.

In the present example, since the high-temperature flue gas 12A₁ is turned into a low-temperature flue gas 12A₂ of 150°C by the air preheater 19, the temperature of the flue gas introduced into the SO₂·SO₃ conversion catalyst unit 15 becomes lower than that in Example 1. Hence, in the present example, a catalyst with high catalytic activity at a low temperature (150°C) is used as the SO₂·SO₃ conversion catalyst to be used in the SO₂·SO₃ conversion catalyst unit 15.

Additionally, since the flue gas 12B of the SO₂·SO₃ conversion catalyst unit 15 also has a low temperature, the amount of the air 20 preheated in the heat exchanger 16 becomes small. However, the preheated air 20A is introduced into the boiler 11 after the air supply line 21 is passed into the air preheater 19 and preheated in the air preheater before the preheated air is introduced into the boiler 11.

Additionally, in this example, in a flue gas treatment system equipped with a related-art wet-type desulfurization device in which the air preheater 19 is installed, the SO₂·SO₃ conversion catalyst unit 15, the heat exchanger 16, and the dust collector 17 are used for a line after the air preheater 19, so that type change can be made from the wet type to a desulfurization type using a heat exchanger in which water is unnecessary. Even in plants in which the wet-type desulfurization device is not installed, the desulfurization type using a heat exchanger can be additionally provided by being bypassed from a duct on the downstream of an existing air preheater.

Hence, even in existing flue gas treatment equipment, type change can be made from the wet type to the desulfurization type using a heat exchanger according to the invention in which water is unnecessary, and the heat of the flue gas can be effectively used. Thus, it is possible to raise the energy efficiency of the power plant by 0.5% or higher.

### Reference Signs List

10A to 10C: FLUE GAS TREATMENT SYSTEM
11: BOILER
12, 12A to 12D: FLUE GAS
13: FLUE
14: DENITRIFICATION DEVICE
15: SO₂·SO₃ CONVERSION CATALYST UNIT
16: HEAT EXCHANGER
17: DUST COLLECTOR
18: CHIMNEY
19: AIR PREHEATER
20: AIR
20A: PREHEATED AIR
30: SULFURIC ACID DROPLET
31: DUST
32: SULFURIC ACID WITH DUST

## Claims

1. An flue gas treatment system comprising:
an SO₂·SO₃ conversion catalyst unit that is provided in a flue through which a flue gas from a boiler is discharged and that has a conversion catalyst which converts SO₂ in the flue gas into SO₃;
a heat exchanger that is provided in the flue on a downstream of the SO₂·SO₃ conversion catalyst unit, that conducts heat exchange between the flue gas and air to lower the temperature of the flue gas to a sulfuric acid dew point or lower, and that condenses SO₃ contained in the flue gas, the temperature of which has been lowered to the sulfuric acid dew point or lower, as sulfuric acid droplets mixed with dust; and
a dust collector that collects the sulfuric acid droplets mixed with the dust contained in the flue gas.

2. The flue gas treatment system according to Claim 1,
wherein an air preheater is interposed on an upstream side of the SO₂·SO₃ conversion catalyst unit.

3. The flue gas treatment system according to Claim 1 or 2, further comprising:
an air supply line that supplies preheated air, with which heat exchange is conducted in the heat exchanger, or boiler circulated water to the boiler.

4. The flue gas treatment system according to Claim 1 or 2, further comprising:
powder supply means for supplying powder, between the SO₂·SO₃ conversion catalyst unit and the heat exchanger.

5. The flue gas treatment system according to Claim 4,
wherein the powder is limestone or collected dust powder that is collected in the dust collector.

6. An flue gas treatment method comprising:
an SO₂·SO₃ conversion catalyst process that is provided in a flue through which an flue gas from a boiler is discharged and that has a conversion catalyst which converts SO₂ in the flue gas into SO₃;
a heat exchange process that is provided in the flue on a downstream of the SO₂·SO₃ conversion catalyst process, that conducts heat exchange between the flue gas and air to lower the temperature of the flue gas to a sulfuric acid dew point or lower; and
a dust collection process that collects sulfuric acid droplets with dust formed in the heat exchanger in making sulfuric acid droplets contained in the flue gas, the temperature of which has been lowered to the sulfuric acid dew point or lower, mix with dust contained in the flue gas.

7. The flue gas treatment method according to Claim 6, further comprising:
an air preheating process on an upstream side of the SO₂·SO₃ conversion-catalyst process.

8. The flue gas treatment method according to Claim 6 or 7,
wherein powder is provided between the SO₂·SO₃ conversion catalyst process and the heat exchange process.
